(19) Europäisches Patentamt
European Patent Office
Office européen des brevets

(11) **EP 3 337 163 A1**

(12) **EUROPEAN PATENT APPLICATION**

(43) Date of publication:
**20.06.2018 Bulletin 2018/25**

(51) Int Cl.:
*H04N 5/58* (2006.01)  *H04N 21/84* (2011.01)
*H04N 21/43* (2011.01)  *H04N 21/47* (2011.01)

(21) Application number: **16306673.1**

(22) Date of filing: **13.12.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Thomson Licensing
92130 Issy-les-Moulineaux (FR)**

(72) Inventors:
• ZEPEDA SALVATIERRA, Joaquin
35576 Cesson-Sévigné (FR)
• REINHARD, Erik
35576 Cesson-Sévigné (FR)
• GUILLOTEL, Philippe
35576 Cesson-Sévigné (FR)

(74) Representative: **Huchet, Anne**
TECHNICOLOR
1-5, rue Jeanne d'Arc
92130 Issy-les-Moulineaux (FR)

(54) **METHOD AND APPARATUS FOR OPTIMAL HOME AMBIENT LIGHTING SELECTION FOR STUDIO GRADED CONTENT**

(57) Reference lighting data is based on a reference lighting setup from a studio environment, such as a color-grading studio. The reference lighting data is synchronized with video content being processed at the studio. The reference lighting data is available at a viewer location, for example, through concurrent transmission or stored on a disk. The viewer location uses cameras to capture illumination data that is compared to the reference lighting data and a control signal is generated to control lighting at the viewer location. The control signal is synchronized with the video because the reference lighting data is synchronized with the video. In one embodiment, the reference lighting data is also synchronized with events of a game, so that a user playing games in a gaming environment will have his lighting synchronized with video and events of the game. In another embodiment, the reference lighting data is embedded on a disk.

*FIG. 4*

**Description**

FIELD OF THE INVENTION

The present principles relate to illumination control in a viewing environment that is synchronized to video data.

BACKGROUND OF THE INVENTION

Human color perception is affected by the spatially-varying spectral composition of ambient light inflicted on the human eye. Because of this, viewing video content in an ambient light environment different from the one present during filming and post-processing can distort the end-user's perception from what a video director intended.

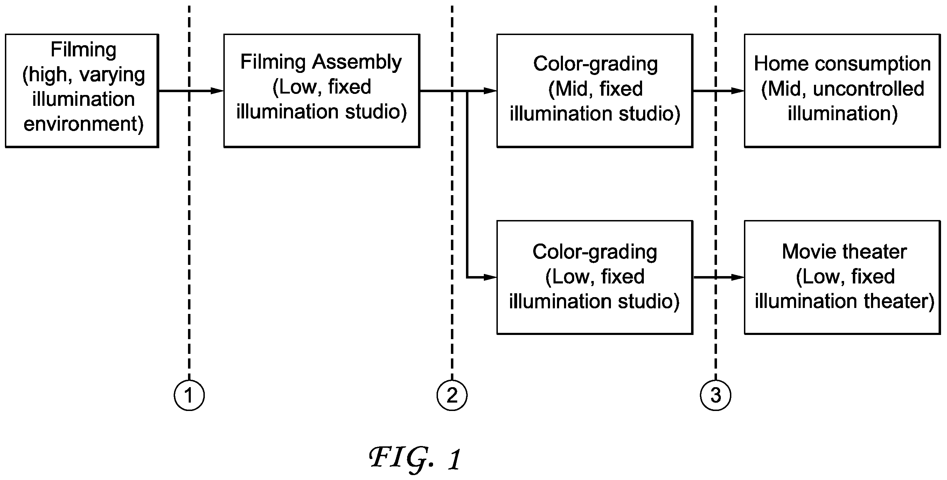

Three main transition points in the content production/consumption chain are responsible for strong ambient light differences, as shown in Figure 1.

The first occurs when filming stops and scene film assembly begins. Whereas filming is carried out in light conditions that vary from scene to scene including, for example, highly-illuminated outdoor scenes, the film assembly process is carried out in small, low-illumination studios.

The second transition point is after film assembly is complete, and before color grading is performed. Color grading can be performed in mid-lit, fixed illumination studio, and in low-lit, fixed illumination studios.

The third transition point occurs when color-grading stops and end consumption begins. The resulting difference in lighting conditions is more important in the case of home consumption, as the lighting conditions in private homes vary widely and are mostly different from the carefully calibrated lighting conditions of the color-grading studio.

However, this process can leave video being viewed in the home consumption environment looking less optimal, since lighting in a home environment can vary widely from that in the color grading studio where it was processed.

SUMMARY OF THE INVENTION

These and other drawbacks and disadvantages of the prior art are addressed by at least one of the described embodiments, which are directed to a method and apparatus for optimal home ambient lighting selection for studio graded content.

According to a general aspect described herein, there is provided a method, comprising: obtaining illumination data representative of ambient light conditions in a viewing environment; outputting a control signal in response to a difference between said obtained illumination data and reference lighting data synchronized with video data, and controlling at least one light in said viewing environment in response to said control signal during display of said video data.

According to another general aspect described herein, there is provided an apparatus for illumination control. The apparatus comprises a memory, and a processor. The processor is configured to: obtain illumination data representative of ambient light conditions in a viewing environment; output a control signal in response to a difference between said obtained illumination data and reference lighting data synchronized with video data, and control at least one light in said viewing environment in response to said control signal during display of said video data.

According to another general aspect described herein, there is provided another method. The method comprises obtaining reference lighting data representative of ambient lighting conditions from a studio environment, said reference lighting data synchronized with video data; making said reference lighting data available to a viewer of said video data, and making said video data available for display.

According to another general aspect described herein, there is provided an apparatus. The apparatus comprises at least one camera to capture reference lighting data representative of ambient light conditions from a studio environment, said reference lighting data synchronized with video data, and, a device to make said illumination data available to a viewer of said video data.

According to another general aspect described herein, there is provided a signal comprising video data and reference lighting data comprising luminance and chrominance information from lighting controls based on a reference lighting setup, wherein said reference lighting data is synchronized to said video data.

These and other aspects, features and advantages of the present principles will become apparent from the following detailed description of exemplary embodiments, which is to be read in connection with the accompanying drawings.

BRIEF DESCRIPTION OF THE DRAWINGS

Figure 1 shows one example of the film production and consumption pipeline and resulting ambient light transition points.

Figure 2 shows an example camera system.

Figure 3 shows one example of a setup inside a color grading studio.

Figure 4 shows an example setup inside an end-user's home.

Figure 5 shows one embodiment of a home light control procedure.

Figure 6 shows an example multiplex of video, audio and lighting effects data.

Figure 7 shows an example of reference lighting data varying over time.

Figure 8 shows a sample embodiment of a data format for conveying reference lighting data.

Figure 9 shows an exemplary embodiment of a method for illumination control.

Figure 10 shows an exemplary embodiment of an apparatus for illumination control.

Figure 11 shows an exemplary embodiment of a method for conveying reference lighting data.

Figure 12 shows an exemplary embodiment of an apparatus for conveying reference lighting data.

## DETAILED DESCRIPTION

An approach is described for optimal home ambient lighting selection for studio graded content.

In this description, an ambient light compensation method is proposed that reduces the difference in ambient light between the color-grading studio and end user homes, as this is the transition that can have the greatest impact on color perception. At least one of the embodiments of this approach addresses the high variability in ambient lighting between homes. The described embodiments can further deal with real-time variations in ambient lighting at a given home. Real-time variations in users' homes can result from various situations including sunsets, sunrises, lights being turned on or off, and changes in the layout of the room, for example when a new person enters the room, or when a door opens or closes.

Figure 1 illustrates the film production/consumption pipeline, consisting broadly of four main steps: filming, film assembly, color-grading and final consumption. The filming process produces disjoint scenes from which some are selected and assembled into a coherent film. Once the film is assembled, it is color-graded for two consumption environments, the home and the movie theater, producing two different versions of the film. The aim of the color-grading process is to prepare the film, such as by changing its color, so that, when viewed in the ambient lighting conditions of the final consumption environment, it is perceptually similar to what a video director had intended. Hence the need for two different color-grading processes, one for medium-lit environments, for example as in a home, and one for dark environments, similar to a movie theater for example.

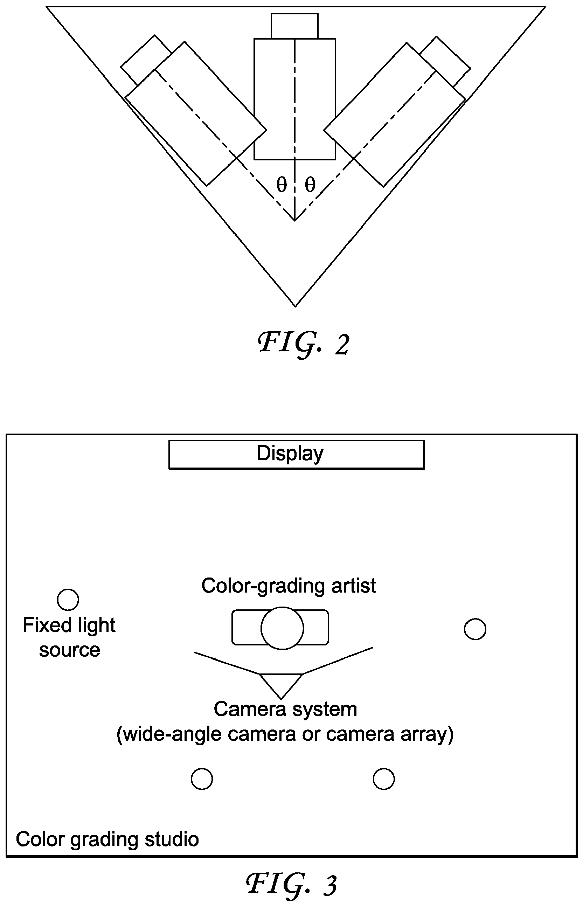

The approach proposed by at least one of the herein described embodiments consists of using a camera system to capture the lighting conditions in the color-grading studio as well as in the viewer's home. A camera system can consist for example, of a single wide-angle camera, or of an array of $C$ cameras, as shown in Figure 2, each capturing different, and potentially overlapping, portions of the viewer's visual field. They can be standard cameras producing a single frame $F_k$ at any capture instant $t$, or plenoptic cameras that capture multiple frames $F_k^i, i = 1, \ldots, N$ at $N$ different focal lengths at each time instant $t$.

The cameras in the system used can be calibrated so that first, they have the same color profile and, secondly, each pixel position in the captured image can be mapped to an angle of incidence of the captured light. If, however, the cameras are not calibrated exactly with others, then the parameters to enable compensation must be sent or provided to the viewing environment.

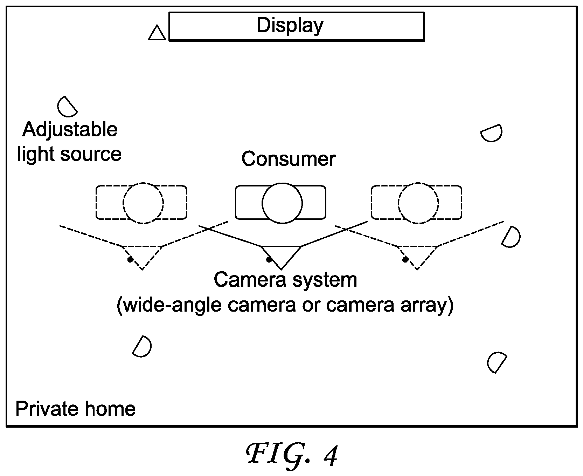

One example camera setup for a color-grading studio is illustrated in Figure 3 and another example for a private home is illustrated in Figure 4. Note that a camera system is placed near the viewer, be it the color-grading artist or the home user, in both environments, as it aims to capture the ambient lighting conditions as experienced by the user. The data that represents ambient lighting conditions is reference lighting data, in that it represents the lighting conditions for the reference lighting setup in a studio.

Note further that the control parameters of the light sources in the color-grading studio are fixed, as this is required by the color-grading artist. The light sources in the home, on the other hand, are assumed to have adjustable parameters that can be controlled electronically. These adjustable parameters can include position parameters including the orientation of the beam and the position of the source. Positioning can be implemented by means of rail-mounted fixtures, for example. Adjustable parameters can also comprise photometric parameters such as the intensity, color, and spread of the beam. Let $\theta^l$ denote the vector of values defining all the adjustable parameters of light source $l$.

At least one of the compensation method embodiments proposed herein minimizes the difference in ambient light between the color-grading studio and a user's home by actively searching for a vector $\theta^l$ for each light source. Such a vector can indicate the angle of incidence for each light source. This search method can be formulated as an optimization problem where gradients are computed using finite differences.

A single, standard camera system is described first. It is assumed that the video is provided along with metadata

including timestamps $t_k$, with a reference video frame $F_k$ associated to each of the $k = 1, ..., K$ timestamps. Each reference frame can be used to adjust the parameters $\theta^l$ for all light sources $l = 1, ..., L$ in the home environment. Alternatively, a selected number of frames can be used for adjustment. This adjustment can be carried out simultaneously, or sequentially at different times, in different combinations for all light sources at a movie playtime $t_l$. Adjusting the $\theta^l$ multiple times along the duration of the video allows the system to adapt to varying home environment ambient lighting conditions, as a reference ambient lighting specification is available at various time instants $t_l$, or to a situation wherein the film is started midway. It further allows the system to deal with situations wherein the screen content luminance is strong enough to influence ambient lighting conditions. Yet another use of this redundancy is in lighting authoring applications wherein the light sources are used as an artistic tool by the content creators and are hence meant to enhance the viewing experience rather than just equalize the lighting conditions in the home environment and the end user environment, as described later.

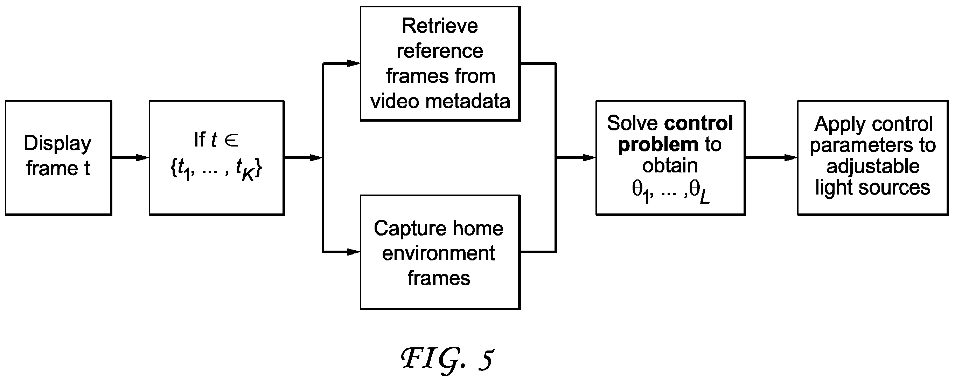

One exemplary parameter control method is as follows and shown in Figure 5. Let $\Theta = [\theta^1, ..., \theta^l]$ denote the matrix containing the control parameters for all the adjustable light sources in the home.

At a given time instant $t_k$ during movie playback, the home camera system will then proceed to solve the following optimization problem:

$$\text{(control problem)} \quad \boldsymbol{G}_k = \operatorname{argmin}_{\boldsymbol{\Theta}} \ell\left(\boldsymbol{F}_k, \boldsymbol{X}(\boldsymbol{\Theta})\right), \text{ where } \ell\left(\boldsymbol{X}, \boldsymbol{Y}\right) \triangleq \|\boldsymbol{X} - \boldsymbol{Y}\|_F^2 \quad (1)$$

where $X(\Theta)$ is the frame captured by the camera system (assuming a single, standard camera system) in the home user environment when the light sources have input control values $\Theta$.

In practice, Equation (1) cannot be solved exactly because existing numerical optimizers and frame capture $X(\Theta)$ take a non-zero amount of time to occur. This is because existing numerical optimizers operate iteratively, and each iteration would consist of multiple frame captures followed by a gradient descent step. But assume that these operations occur sufficiently fast. More precisely, assume that the differences in the captured frame $X(\Theta)$ between time $t_k$ and time $t_k + \varepsilon D$ are imperceptible, where $\varepsilon$ is the maximum amount of time per iteration of the method and $D$ is the maximum number of iterations. Note that this gives a criterion that can be used to select adequate time instants $t_k$ for the light authoring application, as described later.

Table 1 shows some parameters used in camera systems and lighting sources and the notation used for these parameters in this document for various configurations of camera systems.

Table 1: Summary of notation used in the document for various configurations of camera systems.

| Camera systems | |
|---|---|
| $K$ | Number of reference timestamps. |
| $t_1, ..., t_K$ | Video timestamps for which reference frames from the color grading studio are provided. |
| $N$ | Number of frames produced by each camera at each capture instance. The case $N = 1$ corresponds to standard cameras. The case $N > 1$ corresponds to plenoptic cameras. |
| $C$ | Number of cameras in the camera system. |
| $S$ | Number of camera systems in the home viewing environment. |
| $\boldsymbol{F}_k^{nc}$ | Frame number $n \in \{1, ..., N\}$ captured at time $t_k$, $k \in \{1, ..., K\}$ by a camera $c \in \{1, ..., C\}$ in the grading studio. |
| $\varepsilon$ | Time differences between capture instances by the home environment camera system when numerically choosing the optimal control parameters for the home environment light sources. |
| $\boldsymbol{G}_k^{ncs}$ | Frame number $n \in \{1, ..., N\}$ that is an estimate of frame $\boldsymbol{F}_k^{nc}$, captured by a camera $c \in \{1, ..., C\}$ of camera system $s \in \{1, ..., S\}$ in the home environment. |
| $X(\Theta), X(\Theta, t)$ | Denotes a camera system frame capture operation outputting frames such as $\boldsymbol{G}_k^{ncs}$ or $\boldsymbol{F}_k^{nc}$ and occurring at time $t$. For simplicity, drop the time dependence $t$ |
| **Lighting sources** | |
| $L$ | Number of light sources. |
| $\boldsymbol{\theta}_k^l$ | Vector of control parameters for light source $l \in \{1, ..., L\}$ used to produce frame $\boldsymbol{G}_k^{ncs}$ and applied to the light sources up to time $t_{k+1}$. |

(continued)

| Lighting sources | |
|---|---|
| $\Theta_k$ | Matrix $[\boldsymbol{\theta}_k^l, \ldots, \boldsymbol{\theta}_k^L]$ regrouping all the control parameters. |

*Note:* when any of *N*, *C* or *S* equal 1, the corresponding dummy variable *n, c* or *s* in $\boldsymbol{F}_k^{nc}$ or $\boldsymbol{G}_k^{ncs}$ is dropped.

With this assumption, Equation (1) can be solved using gradient descent with gradients computed differentially. Letting *d* denote the iteration number, at iteration *d* = 0, we capture a frame $G^{(0)} = X(\Theta^{(k-1)})$ and let $\Theta^{(0)} = \Theta_{k-1}$ denote the initial set of parameters, where $\Theta_{k-1}$ is the set of parameters selected at the previous time instant $t_{k-1}$. Given these initializers, at iteration *d*, compute

$$\text{frame capture} \quad \boldsymbol{G}^{(d)} = \boldsymbol{X}(\boldsymbol{\Theta}^{(d-1)}), \qquad (2)$$

$$\text{gradient estimation} \quad \boldsymbol{\nabla}^{(d)} = \frac{\ell(\boldsymbol{F}_k, \boldsymbol{G}^d) - \ell(\boldsymbol{F}_k, \boldsymbol{G}^{(d-1)})}{\boldsymbol{\Theta}^{(d)} - \boldsymbol{\Theta}^{(d-1)}} \quad \text{and} \qquad (3)$$

$$\text{and parameter update} \quad \Theta^{(d)} = \Theta^{(d-1)} - \gamma_d \nabla^{(d)} \qquad (4)$$

where the division in (3) is element-wise. The learning rate $\gamma_d$ needs to be set to a decaying series or a constant. The selection of the parameters defining $\gamma_d$ needs to be done empirically or in real-time by means of cross-validation.

Next, a multi-camera, multi-frame capture system is described. To enhance the balancing of source lighting and home environment lighting, three extensions to the above setup can be considered.

In the first extension, each camera system is composed of multiple cameras labeled *c* = 1, ..., *C*. This enables widening the field of view addressed by the control system.

In the second extension, each camera system produces more than a single frame at each capture instant. This case encompasses wide-spectrum cameras as well as plenoptic cameras. Let *n* = 1,..., *N* to denote the frame number in this case.

In the third extension, let the home system contain multiple camera systems, as for example, the two systems with transparent shading in Figure 4. This situation addresses the common case wherein multiple viewers seated at different positions are consuming the same content simultaneously. Alternatively, only a few of these camera systems are enabled at any given time depending on the position of the viewers, as detected by proximity sensors, shown as dots in the figure, or an auxiliary camera, shown by the triangle in the figure, that estimates the sitting layout based on vision processing techniques. Let *s* = 1, ..., *S* identify the active camera systems.

With these extensions and the corresponding notation, the following generalization of (1) can be defined:

$$\text{(control problem)} \quad \boldsymbol{G}_k = \operatorname{argmin}_{\boldsymbol{\Theta}} \sum_{n,c,s=1}^{N,C,S} w_{ncs} \ell\left(\boldsymbol{F}_k^{nc}, \boldsymbol{X}^s(\boldsymbol{\Theta})\right). \qquad (5)$$

The weights $w_{ncs} \geq 0$ allow greater importance to be given to different components of the objective. One possibility is to make these weights separable ($w_{ncs} = w_n w_c w_s$ with $w_n, w_c, w_s \geq 0$), and set each according to a relevant psycho-physical model. For example, $w_n$ could be set according to visual sensitivity to spectral content or depth; $w_c$, could be set according to sensitivity to the angle of incidence of the impinging light, and $w_s$ could be set as a decreasing function of proximity of the viewer to the corresponding camera system.

While the above discussion has been focused on the case wherein it is desired to reproduce the grading studio lighting conditions in the home environment, the same approach can be used to address the case wherein the grading studio color artist actively modifies the lighting conditions as an artistic means of enhancing the viewing experience. Note further that this application is valid not only for the home viewing environment, but also for movie theaters.

Although not discussed, another alternative is having multiple camera systems in the grading studio. For example, the color artists might want to reproduce the home viewing environment to see, for example, how compatible his authored lighting is with multi-camera-system home viewing environments.

The presented system can be implemented using inexpensive off-the-shelf cameras to generate control information to adjust the illumination in a consumer's viewing environment to match the viewing environment in a grading studio, thereby enhancing the viewing experience of content according to the director's intent. It can also be used for creative purposes, if the metadata provided in the video stream is actively authored.

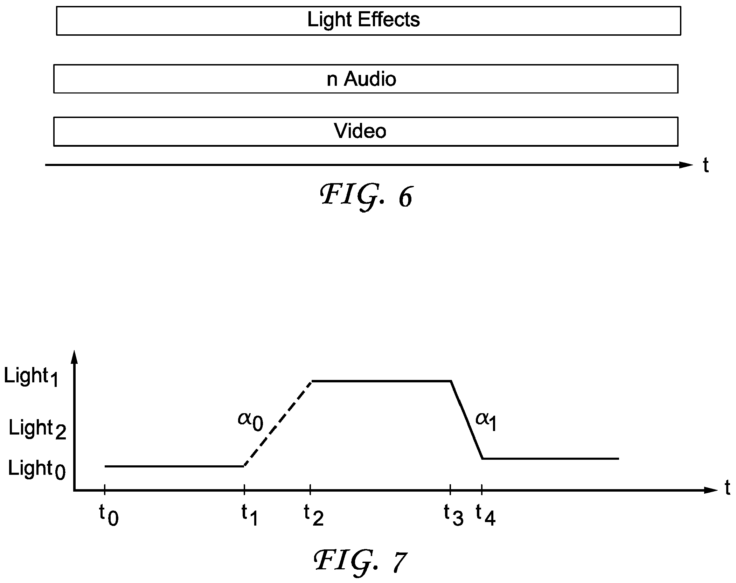

The created metadata can be transmitted to a receiver together with audio/video (A/V) streams in the appropriate multiplex, an example as shown in Figure 6. The metadata is then decoded at a received location, some adaptation is performed if necessary, and the light effect is rendered by lights at the received location.

The same concept can be included into a gaming design platform and editing tools. The created data are then included into the gaming representation format as additional information. As an example, assuming a representation format similar to XML, dedicated metadata messages are created and played back by a gaming platform.

The emission characteristics of the light sources can be summarized into a straightforward descriptor, such as luminance $L$ along with $a$ and $b$ chromaticity coordinates (i.e. a single tristimulus value in the CIELab color space). Alternatively, they can be encoded in various other formats, such as RGB for example.

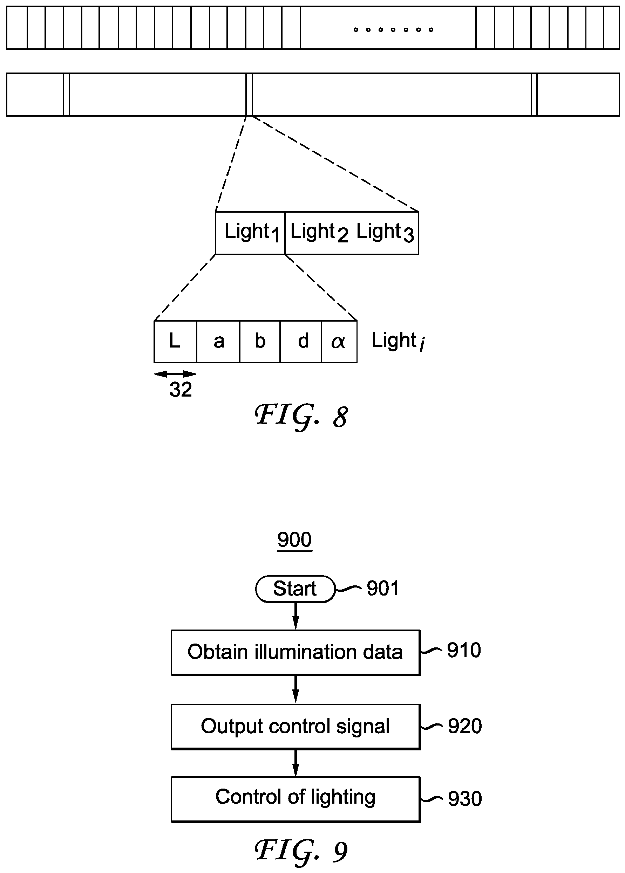

The light effect is captured at the location of content creation, at a given time during a particular media content, such as a movie, show, or cartoon, for example. The light effect can comprise a color with its duration and speed, for example, an example as shown in Figure 7. Figure 7 depicts one such control signal for simplicity, although three controls are labelled on its y-axis. The synchronization is assumed by a network layer (for example IP, MPEG-2 TS, mp4 file....) that includes appropriate timestamps to the A/V/L (audio/video/light) data packets, an example as shown in Figure 6. The codeword, an example as shown in Figure 8, can have a configuration, for example, of:

1) three 32 bit fields of information for the color information $Lab$
2) A 32 float field for the duration $d$ of light
3) A 32 float field for parameters $\alpha$ describing the speed to move from one light level to another one. This can be defined as a linear function, and in terms of seconds, for example.

Devices capable of controlling light sources in a home using metadata synchronized with A/V content can use the described embodiments. For gaming, dedicated light codes can be added into the game description language.

At least one described embodiment proposes to create, distribute and render illumination effects to replicate the light effect during film creation of post-production. The final goal being to increase the immersion for the final viewer. The illumination in the grading studio can be characterized by the color of several light sources together with their number and assumed position in the viewing room. The color of the light source can be encoded as metadata synchronized with the A/V stream in any transmission (broadcast, OTT, etc.), and could also be embedded on DVDs and Blu-Ray disks. The ISO/IEC 23005 standard (aka MPEG-V) can be used to describe such data, or a simplified format inspired by audio multi-channel schemes can be used. The recipient (or player) would receive these values, optionally perform some adaptation or mapping to fit with the consumer setup, compared to the reference one, and then dynamically control lights/projectors through the consumers' home WiFi, for example, or through any other protocol used to interact with connected lights/projectors to render the light effects. Visible light communications is another possibility.

One embodiment of the ideas herein described is illustrated in Figure 9. Figure 9 shows one embodiment of a method 900 for illumination control. The method commences at Start block 901 and control proceeds to block 910 for obtaining illumination data. The illumination data is representative of the lighting conditions at a viewer location. Control proceeds from block 910 to block 920 for outputting a control signal in response to a difference between the obtained illumination data and a reference lighting data synchronized with video data. Control then proceeds from block 920 to block 930 for controlling at least one light in the viewing environment in response to the control signal during display of the video data.

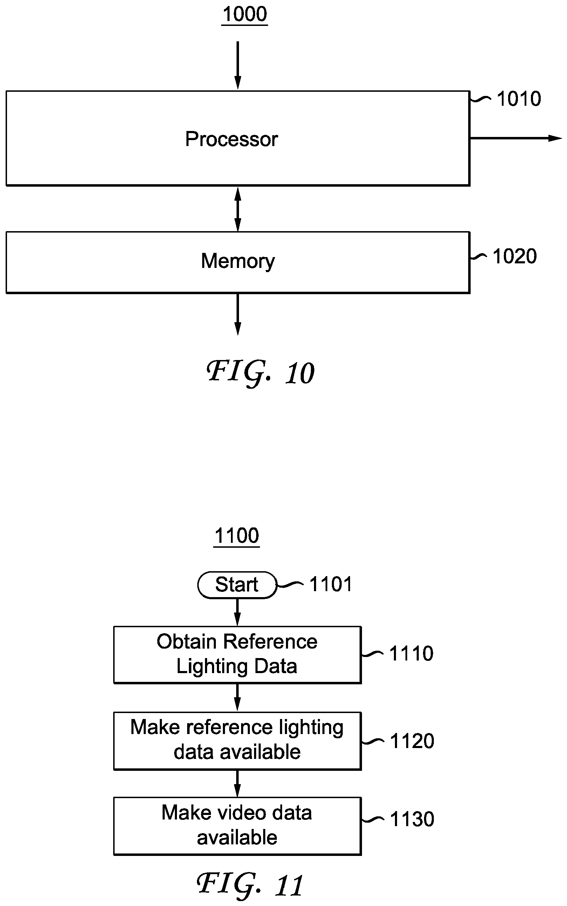

Another embodiment of the described ideas is illustrated in Figure 10 which shows an apparatus 1000 for illumination control. The apparatus comprises a Memory 1020 which is in signal communication with Processor 1010. Processor 1010 is configured to obtain illumination data representative of ambient light conditions in a viewing environment, output a control signal in response to a difference between said obtained illumination data and reference lighting data synchronized with video data, and control at least one light in said viewing environment in response to said control signal during display of said video data.

Another embodiment of the described ideas is illustrated in Figure 11 which shows a method 1100 for conveying reference lighting data. The method commences at Start block 1101 and control proceeds to block 1110 for obtaining reference lighting data representative of ambient lighting conditions from a studio environment, the reference lighting data synchronized with video data. Control proceeds from block 1110 to block 1120 for making the reference lighting data available to a viewer of the video data. Control then proceeds from block 1120 to block 1130 for making the video data available for display.

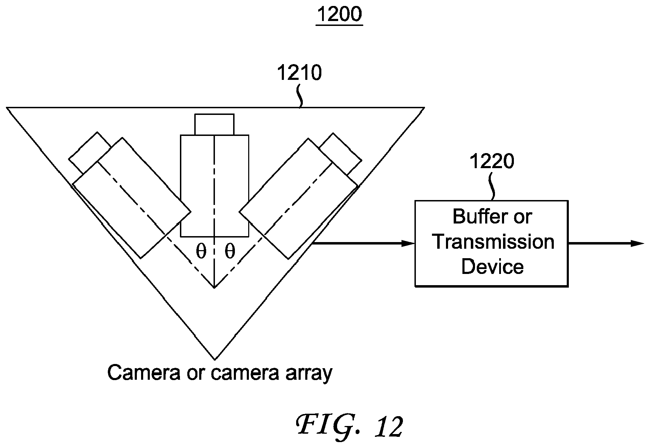

Another embodiment of the described ideas is illustrated in Figure 12, which shows an apparatus 1200 for conveying reference lighting data. The apparatus comprises at least one Camera 1210 to capture reference lighting data representative of ambient light conditions from a studio environment, the reference lighting data synchronized with video data. The apparatus further comprises a device to make said illumination data available to a viewer of the video data. Such a device can comprise a buffer, a disk, or a transmission device, for example.

In the embodiment of Figure 10, transmission of the lighting control signal may be accomplished in a variety of ways, such as WiFi, Li-Fi, or a Visible Light Communications system, for example. Control can also be accomplished via hard wire.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

The present description illustrates the present ideas. It will thus be appreciated that those skilled in the art will be able to devise various arrangements that, although not explicitly described or shown herein, embody the present ideas and are included within its scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

**Claims**

1. A method for illumination control, comprising:

    obtaining illumination data representative of ambient light conditions in a viewing environment;
    outputting a control signal in response to a difference between said obtained illumination data and reference lighting data synchronized with video data, and
    controlling at least one light in said viewing environment in response to said control signal during display of said video data.

2. An apparatus for illumination control, comprising:

a memory, and
a processor, configured to:

obtain illumination data representative of ambient light conditions in a viewing environment;
output a control signal in response to a difference between said obtained illumination data and reference lighting data synchronized with video data, and
control at least one light in said viewing environment in response to said control signal during display of said video data.

3. The method of Claim 1 or the apparatus of Claim 2, wherein said reference light data is included as metadata with said video content.

4. The method of Claim 1 or 2, or the apparatus of Claim 2 or 3, wherein said control signal is sent to a wireless control device.

5. The method of Claim 1, 2 or 4, or the apparatus of any one of claims 2 to 4, wherein said processor is implemented with a gateway device and said control signal is sent to a wireless controller.

6. The method of Claim 1, 3, 4 or 5 or the apparatus of any one of claims 2 to 5, wherein said video data is received by a mobile device and said mobile device generates said control signal to control at least one light in said viewing environment.

7. A method for conveying reference lighting data, comprising:

obtaining reference lighting data representative of ambient lighting conditions from a studio environment, said reference lighting data synchronized with video data;
making said reference lighting data available to a viewer of said video data, and
making said video data available for display.

8. An apparatus for conveying illumination data, comprising:

at least one camera to capture reference lighting data representative of ambient light conditions from a studio environment, said reference lighting data synchronized with video data, and,
a device to make said illumination data available to a viewer of said video data.

9. The method of Claim 7 or the apparatus of Claim 8, wherein said reference lighting data is multiplexed with said video data into a single data stream.

10. The method of Claim 7 or 9, or the apparatus of Claim 8 or 9, wherein said reference lighting data is made available to a viewer of said video data through transmission.

11. The method of Claim 7, 9 or 10 or the apparatus of any one of claims 8 to 10, wherein said reference lighting data is made available to a viewer of said video by being burned onto a disk.

12. The method of Claim 7, 9, 10 or 11 or the apparatus of any one of claims 8 to 11, wherein said reference lighting data is further synchronized with audio data.

13. A non-transitory computer readable medium containing data content generated according to the method of any one of claims 7 and 9 to 12, or by the apparatus of any one of claims 8 to 12, for playback using a processor.

14. A signal comprising video data and reference lighting data comprising luminance and chrominance information from lighting controls based on a reference lighting setup, wherein said reference lighting data is synchronized to said video data.

15. A computer program product comprising instructions which, when the program is executed by a computer, cause the computer to carry out the method of any one of claims 1, 3 to 7 and 9 to 12.

*FIG. 1*

## FIG. 2

Display

Color-grading artist

Fixed light
source

Camera system
(wide-angle camera or camera array)

Color grading studio

## FIG. 3

Display

Adjustable
light source

Consumer

Camera system
(wide-angle camera or camera array)

Private home

*FIG. 4*

```
┌──────────┐     ┌──────────┐     ┌──────────────┐
│          │     │          │     │   Retrieve   │
│ Display  │────▶│ If t ∈   │────▶│  reference   │
│ frame t  │     │{t₁, ..., │  ┌─▶│ frames from  │──┐
│          │     │   t_K}   │  │  │video metadata│  │
└──────────┘     └──────────┘  │  └──────────────┘  │
                               │                     │
                               │  ┌──────────────┐   │
                               │  │ Capture home │   │
                               └─▶│ environment  │───┘
                                  │    frames    │
                                  └──────────────┘
```

Display frame t → If $t \in \{t_1, \ldots, t_K\}$ → Retrieve reference frames from video metadata / Capture home environment frames → Solve **control problem** to obtain $\theta_1, \ldots, \theta_L$ → Apply control parameters to adjustable light sources

*FIG. 5*

EP 3 337 163 A1

| Light Effects |
|---|

| n Audio |
|---|

| Video |
|---|

$t$

## FIG. 6

$Light_1$

$Light_2$

$Light_0$

$\alpha_0$

$\alpha_1$

$t_0$     $t_1$   $t_2$     $t_3$ $t_4$    $t$

## FIG. 7

*FIG. 8*

900

*FIG. 9*

<u>1000</u>

Processor ⌐ 1010

Memory ⌐ 1020

*FIG. 10*

<u>1100</u>

( Start ) ⌐ 1101

Obtain Reference Lighting Data ⌐ 1110

Make reference lighting data available ⌐ 1120

Make video data available ⌐ 1130

*FIG. 11*

1200

1210

1220

Buffer or
Transmission
Device

θ θ

Camera or camera array

*FIG. 12*

Europäisches
Patentamt

European
Patent Office

Office européen
des brevets

# EUROPEAN SEARCH REPORT

Application Number

EP 16 30 6673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/274809 A1 (YANG CHIA-HSIN [TW] ET AL) 1 November 2012 (2012-11-01) * paragraph [0008] - paragraph [0013] * * paragraph [0027] - paragraph [0029] * ----- | 1-15 | INV. H04N5/58 H04N21/84 H04N21/43 H04N21/47 |
| X | WO 2008/068698 A1 (KONINKL PHILIPS ELECTRONICS NV [NL]; SEKULOVSKI DRAGAN [NL]; CLOUT RAM) 12 June 2008 (2008-06-12) * page 1, paragraph 3 - page 5, paragraph 2 * * page 7, paragraph 3 - page 8, paragraph 1 * ----- | 1-15 | |

**TECHNICAL FIELDS
SEARCHED (IPC)**

H04N

The present search report has been drawn up for all claims

| Place of search | Date of completion of the search | Examiner |
|---|---|---|
| Munich | 3 April 2017 | Biro, Zoltan |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

......................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 30 6673

This annex lists the patent family members relating to the patent documents cited in  the above-mentioned European search report.
The members are as contained in the European Patent Office EDP file on
The European Patent Office is in no way liable for these particulars which are merely given for the purpose of information.

03-04-2017

| Patent document cited in search report | | | Publication date | Patent family member(s) | | | Publication date |
|---|---|---|---|---|---|---|---|
| US 2012274809 | A1 | | 01-11-2012 | TW<br>US | 201243820<br>2012274809 | A<br>A1 | 01-11-2012<br>01-11-2012 |
| WO 2008068698 | A1 | | 12-06-2008 | CN<br>EP<br>JP<br>RU<br>US<br>WO | 101548551<br>2103145<br>2010511986<br>2009126156<br>2010177247<br>2008068698 | A<br>A1<br>A<br>A<br>A1<br>A1 | 30-09-2009<br>23-09-2009<br>15-04-2010<br>20-01-2011<br>15-07-2010<br>12-06-2008 |

EPO FORM P0459

For more details about this annex : see Official Journal of the European Patent Office, No. 12/82